# EUROPEAN PATENT SPECIFICATION

(11) **EP 3 315 558 B1**
(45) Date of publication and mention of the grant of the patent: **03.08.2022**
(21) Application number: 16814418.6
(22) Date of filing: 23.06.2016
(51) Int. Cl.: C08L 81/06, C08J 5/08, C08K 3/38, C08K 7/14, C08L 67/00

(54) **RESIN COMPOSITION AND MOLDED OBJECT**
HARZZUSAMMENSETZUNG UND FORMKÖRPER
COMPOSITION DE RÉSINE ET OBJET MOULÉ

(30) Priority: 26.06.2015 JP 2015128638
(43) Date of publication of application: 02.05.2018
(73) Proprietor: SUMITOMO CHEMICAL COMPANY, LIMITED, Tokyo 103-6020 (JP)
(72) Inventor: SAKAI, Taiga, Tsukuba-shi Ibaraki 300-3294 (JP); MAEDA, Mitsuo, Tokyo 104-8260 (JP)
(74) Representative: Vossius & Partner Patentanwälte Rechtsanwälte mbB
(86) International application number: PCT/JP2016/068590
(87) International publication number: WO 2016/208649

(56) References cited:
- WO-A1-2009/072641
- JP-A- H11 181 284
- JP-A- 2002 020 621
- JP-A- 2002 020 621
- JP-A- 2002 020 622
- JP-A- 2002 020 622
- JP-A- 2013 185 044
- JP-A- 2013 209 621
- JP-A- 2013 209 622
- US-A1- 2010 271 268

## Description

### TECHNICAL FIELD

The present invention relates to a resin composition and a molded object obtained using the resin composition.

Priority is claimed on Japanese Patent Application No. 2015-128638, filed June 26, 2015.

### BACKGROUND ART

Miniaturization is an ongoing trend in all manner of application fields, including electric and electronic components, vehicle components, aircraft components and other miscellaneous goods, and resin products including plastics, namely resin compositions, are being suitably used as the materials for forming these components. The workability of these types of resin compositions has improved in recent years, and there are increasing opportunities for the use of such resin compositions as materials for forming molded objects that are prone to external appearance problems, including components such as the casings for products, and other comparatively large components.

For example, in the case of vehicle components and aircraft components and the like, the color is often considered important in terms of adjusting the color tone and design relative to other components, but when these components are used for long periods, there is a possibility that the color may change, causing a deterioration in the external appearance of the product. Further, in the case of vehicle components and aircraft components, in addition to improvements in the heat resistance and workability, superior strength and a high elastic modulus are also desirable. Accordingly, many compositions containing a glass filler are known as resin compositions for use as materials for forming vehicle components and aircraft components (for example, see Patent Document 1).

Patent Document 2 relates to an aromatic polysulfone resin composition which comprises 5-50 parts by weight liquid crystal polyester resin having a flow temperature of 250-400°C, 5-100 parts by weight glass fiber having an average fiber diameter of 2-8 µm, based on 100 parts by weight aromatic polysulfone resin having a melt viscosity of not more than 200-1,000 Pa.s as measured at 340°C and a shear rate of 1,000 s⁻¹.

Patent Document 3 concerns a particular aromatic polysulfone resin composition which comprises 5-50 parts by weight liquid crystal polyester resin having a flow temperature of 250-400°C, 5-100 parts by weight glass fiber and 5-100 parts by weight inorganic filler in the form of plate, based on 100 parts by weight aromatic polysulfone resin having a melt viscosity of 200-1,000 Pa.s as measured at 340°C and a shear rate of 1,000 s⁻¹ wherein a ratio by weight of the inorganic filler in the form of plate to the glass fiber is not more than 1. Patent Document 4 describes a particular aromatic polysulfone resin composition which comprises (A) 80-99.5 wt.% aromatic polysulfone having 5,000-10,000 poise melt viscosity measured at 340°C under 1,000 sec⁻¹ shear rate and (B) 0.5-20 wt.% liquid crystalline polyester.

Patent Document 5 relates to a resin composition which includes a liquid crystal polyester that includes repeating units of particular formulae (1), (2), and (3), wherein a content of a repeating unit including 2,6-naphthylene group is 40-75 mol% based on 100 mol% of the total amount of the total repeating units.

Patent Document 6 concerns a liquid crystalline polyester resin composition which comprises 50 to 80% by volume of a liquid crystalline polyester which contains a 2,6-naphthalenediyl group as an aromatic group in an amount of 40% by mole or more, which has a fluidization initiation temperature of 280°C or higher, and which has a melt tension of 1 g or more as measured at a temperature higher than the fluidization initiation temperature; and 20 to 50% by volume of a high dielectric material filler.

Patent Document 7 describes a specific liquid crystalline polyester resin composition comprising 50 to 80% by volume of a liquid crystalline polyester (A) having particular structural units, wherein the polyester (A) contains 40% by mol or more of a 2,6-naphthalenediyl group on the basis of 100% by mol of the total of a divalent aromatic group represented by Ar¹, a divalent aromatic group represented by Ar² and a divalent aromatic group represented by Ar³ , and furthermore has a flow initiation temperature of 280°C or higher and shows a melt tension of 1 g or more measured at a temperature higher than the flow initiation temperature; and 20 to 50% by volume of a filler (B) comprising a particular high dielectric material.

### PRIOR ART LITERATURE

### Patent documents

Patent Document 1: JP S62-129347 A
Patent Document 2: JP 2002-020621
Patent Document 3: JP 2002-020622
Patent Document 4: JP H11-181284
Patent Document 5: JP 2013-185044
Patent Document 6: WO 2009/072641
Patent Document 7: US 2010/271268

### SUMMARY OF THE INVENTION

### Problems to be Solved by the Invention

However, some glass fillers suffer discoloration due to degradation upon long-term use, and molded objects obtained using resin compositions containing these types of glass fillers have the problem that there is a possibility that the color of the object may change upon long-term use, causing the occurrence of external appearance defects.

The present invention has been developed in light of these circumstances, and has objects of providing a molded object for which the occurrence of external appearance defects is suppressed even upon long-term use, and also providing a resin composition for obtaining the molded object.

### Means for Solving the Problems

In order to achieve the above objects, one aspect of the present invention is a resin composition comprising an aromatic polysulfone, a liquid crystal polyester and a glass filler, wherein the boron oxide content is less than 1.4% by mass, and wherein the amount of the liquid crystal polyester is at least 10 parts by mass but not more than 30 parts by mass, per 100 parts by mass of the total mass of the aromatic polysulfone, the liquid crystal polyester and the glass filler.

In one aspect of the present invention, the glass filler is preferably glass fiber.

In one aspect of the present invention, the amount of the glass filler is preferably at least 3 parts by mass but not more than 30 parts by mass, per 100 parts by mass of the total mass of the aromatic polysulfone, the liquid crystal polyester and the glass filler.

In one aspect of the present invention, the average fiber length of the glass fiber is preferably at least 1 mm but not more than 4 mm.

Further, one aspect of the present invention is a molded object obtained by molding the above resin composition.

Thus, the present invention relates to a
resin composition comprising an aromatic polysulfone, a liquid crystal polyester and a glass filler, wherein the boron oxide content, relative to the total mass of the resin composition, is less than 1.4% by mass, and
wherein an amount of the liquid crystal polyester, when the total mass of the aromatic polysulfone, the liquid crystal polyester and the glass filler is deemed to be 100 parts by mass, is at least 10 parts by mass but not more than 30 parts by mass.

The present invention furthermore relates to a molded object formed from the resin composition as defined herein.

### Effects of the Invention

The present invention is able to provide a molded object for which the occurrence of external appearance defects is suppressed even upon long-term use, and a resin composition used for obtaining the molded object.

### BRIEF DESCRIPTION OF THE DRAWINGS

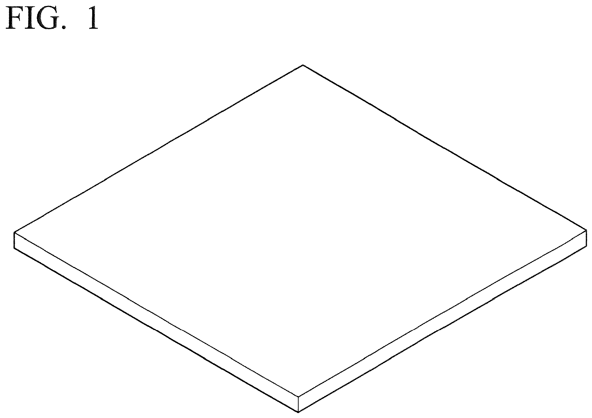

FIG. 1 is a diagram illustrating a molded object that represents one embodiment of the present invention.

### EMBODIMENTS FOR CARRYING OUT THE PRESENT INVENTION

### <Resin Composition>

The resin composition of the present embodiment comprises an aromatic polysulfone, a liquid crystal polyester and a glass filler, wherein the amount of boron oxide (hereinafter sometimes referred to as B₂O₃), relative to the total mass of the resin composition, is less than 1.4% by mass, and wherein the amount of the liquid crystal polyester is at least 10 parts by mass but not more than 30 parts by mass, per 100 parts by mass of the total mass of the aromatic polysulfone, the liquid crystal polyester and the glass filler. In the resin composition of this embodiment, by ensuring that the boron oxide content falls within this type of range, with the resin composition either containing no boron oxide, or having a small boron oxide content, changes in the color over a long time period are suppressed, and the occurrence of external appearance defects is suppressed. Further, a molded object obtained from the above resin composition is also resistant to the occurrence of external appearance defects caused by changes in the color, even when used for long periods.

In the resin composition of the present embodiment, the boron oxide content, relative to the total mass of the resin composition, is preferably not more than 1.35% by mass, more preferably not more than 1.3% by mass, and even more preferably 1.25% by mass or less. By ensuring that the boron oxide content falls within this type of range, the effects described above can be further enhanced.

In the resin composition of the present embodiment, there are no particular limitations on the lower limit for the boron oxide content, and relative to the total mass of the resin composition, the amount may be 0% by mass (substantially 0% by mass), namely, the resin composition may contain no boron oxide.

In other words, the boron oxide content in the resin composition of the present embodiment is at least 0% by mass but less than 1.4% by mass, and is preferably at least 0% by mass but not more than 1.35% by mass, more preferably at least 0% by mass but not more than 1.3% by mass, and even more preferably at least 0% by mass but not more than 1.25% by mass.

Further, in another aspect, the boron oxide content in the resin composition of the present embodiment, relative to the total mass of the resin composition, may be at least 0% by mass but not more than 1% by mass, may be at least 0% by mass but not more than 0.7% by mass, may be at least 0% by mass but not more than 0.4% by mass, or may be substantially 0% by mass.

The boron oxide content of the resin composition can be determined by treating the resin composition at high temperature (for example, 500 to 700°C) to remove the resin component, and then measuring the boron oxide content of the obtained residue using a conventional method. In terms of enabling the measurement to be performed with high sensitivity, examples of preferred methods for measuring the boron oxide content include inductively coupled plasma mass spectrometry (ICP-MS) and inductively coupled plasma atomic emission spectroscopy (ICP-AES). In this description, the expressions that "the resin composition contains no boron oxide" and "the boron oxide content of the resin composition, relative to the total mass of the resin composition, is substantially 0% by mass" mean that the boron oxide content of the resin composition (namely, the boron oxide content of the above residue) is less than the detection limit. The detection limit varies depending on the analysis equipment used, but is typically not more than several ppm (for example, not more than 10 ppm).

Provided there are no abnormalities in the production process for the resin composition of the present embodiment, if one of the raw materials used such as the aromatic polysulfone, the liquid crystal polyester or the glass filler contains boron oxide, then the resin composition will also contain boron oxide. Accordingly, in the resin composition, in order to reduce the boron oxide content in the manner described above, it is preferable to use raw materials that either contain no boron oxide, or have a low boron oxide content.

Each of the raw materials of the resin composition is described below.

### (Aromatic Polysulfone)

The aromatic polysulfone is typically a resin having a repeating unit comprising a divalent aromatic group (namely, a residual group obtained from an aromatic compound by removing two hydrogen atoms that are bonded to the aromatic ring of the compound), a sulfonyl group (-SO₂-) and an oxygen atom.

In terms of the heat resistance and chemical resistance, the aromatic polysulfone preferably has at least one repeating unit represented by general formula (5) shown below (hereinafter sometimes referred to as "the repeating unit (5)"). The aromatic polysulfone may also have at least one other repeating unit such as a repeating unit represented by general formula (6) shown below (hereinafter sometimes referred to as "the repeating unit (6)") or a repeating unit represented by general formula (7) shown below (hereinafter sometimes referred to as "the repeating unit (7)").

(5) -Ph¹-SO₂-Ph²-O-

-(In the formula, each of Ph¹ and Ph² independently represents a phenylene group, wherein one or more hydrogen atoms in the phenylene group may each be independently substituted with an alkyl group, an aryl group or a halogen atom.)

(6) -Ph³-R-Ph⁴-O-

-(In the formula, each of Ph³ and Ph⁴ independently represents a phenylene group, wherein one or more hydrogen atoms in the phenylene group may each be independently substituted with an alkyl group, an aryl group or a halogen atom, and R represents an alkylidene group, an oxygen atom, or a sulfur atom.)

(7) -(Ph⁵)ₙ-O-

-(In the formula, Ph⁵ represents a phenylene group, wherein one or more hydrogen atoms in the phenylene group may each be independently substituted with an alkyl group, an aryl group or a halogen atom, n represents an integer of 1 to 3, and when n is 2 or greater, the plurality of Ph⁵ groups may be the same or different.)

Each phenylene group represented by any of Ph¹ to Ph⁵ may be, independently, a p-phenylene group, an m-phenylene group or an o-phenylene group, but from the viewpoint of achieving superior levels of heat resistance and strength for the obtained resin, is preferably a p-phenylene group.

The alkyl group that may substitute a hydrogen atom in the phenylene group is preferably an alkyl group having a carbon number of 1 to 10, and examples include a methyl group, ethyl group, n-propyl group, isopropyl group, n-butyl group, isobutyl group, sec-butyl group, tert-butyl group, n-hexyl group, n-heptyl group, 2-ethylhexyl group, n-octyl group, n-nonyl group and n-decyl group.

The aryl group that may substitute a hydrogen atom in the phenylene group is preferably an aryl group having a carbon number of 6 to 20, and examples include monocyclic aromatic groups such as a phenyl group, o-tolyl group, m-tolyl group and p-tolyl group, and condensed aromatic groups such as a 1-naphthyl group and 2-naphthyl group.

Examples of the halogen atom that may substitute a hydrogen atom in the phenylene group include a fluorine atom, chlorine atom, bromine atom and iodine atom.

In those cases where one or more hydrogen atoms in the phenylene group have been substituted with these groups (namely, an alkyl group, an aryl group or a halogen atom), the number of substituents in the phenylene group, although not particularly limited, is preferably one or two, and more preferably one, per phenylene group.

The alkylidene group represented by R is preferably an alkylidene group having a carbon number of 1 to 5, and examples include a methylene group, ethylidene group, isopropylidene group, 1-butylidene group and 1-pentylidene group.

In the aromatic polysulfone, each of the repeating units (5) to (7) may, independently, include only a single type of repeating unit, or include two or more types of repeating units. Among the various possibilities, the aromatic polysulfone preferably has at least 50 mol% but not more than 100 mol%, and more preferably at least 80 mol% but not more than 100 mol%, of the repeating unit (5) relative to the total number of moles of all the repeating units that constitute the aromatic polysulfone, and even more preferably has substantially only the repeating unit (5) as a repeating unit (namely, has 100 mol% of the repeating unit (5)).

The aromatic polysulfone can be produced, for example, by performing a polycondensation of a dihalogenosulfone compound and a dihydroxy compound that correspond with the repeating unit that constitutes the aromatic polysulfone.

For example, an aromatic polysulfone having the repeating unit (5) can be produced by performing a polycondensation of a compound represented by general formula (8) shown below (hereinafter sometimes referred to as "the compound (8)") as the dihalogenosulfone compound, and a compound represented by general formula (9) shown below as the dihydroxy compound.

(8) X¹-Ph¹-SO₂-Ph²-X²

(In the fonnula, each of X¹ and X² independently represents a halogen atom, and Ph¹ and Ph² are as defined above.)

(9) HO-Ph¹-SO₂-Ph²-OH

(In the formula, Ph¹ and Ph² are as defined above.)

Further, an aromatic polysulfone having the repeating unit (5) and the repeating unit (6) can be produced by performing a polycondensation of the aforementioned compound (8) as the dihalogenosulfone compound, and a compound represented by general formula (10) shown below as the dihydroxy compound.

(10) HO-Ph³-R-Ph⁴-OH

(In the formula, Ph³, Ph⁴ and R are as defined above.)

Furthermore, an aromatic polysulfone having the repeating unit (5) and the repeating unit (7) can be produced by performing a polycondensation of the aforementioned compound (8) as the dihalogenosulfone compound, and a compound represented by general formula (11) shown below as the dihydroxy compound.

(11) HO-(Ph⁵)ₙ-OH

(In the formula, Ph⁵ and n are as defined above.)

The polycondensation is preferably performed in a solvent using an alkali metal carbonate salt. The alkali metal carbonate salt may be an alkali carbonate that is a normal salt (for example, a carbonate of an alkali metal), may be an alkali bicarbonate that is an acid salt (for example, an alkali hydrogen carbonate or a hydrogen carbonate of an alkali metal), or may be a mixture of both (for example, a mixture of an alkali carbonate and an alkali bicarbonate).

Examples of preferred alkali carbonates include sodium carbonate and potassium carbonate.

Examples of preferred alkali bicarbonates include sodium bicarbonate and potassium bicarbonate.

Examples of preferred solvents for use in the polycondensation include organic polar solvents such as dimethyl sulfoxide, 1-methyl-2-pyrrolidone, sulfolane (also called 1,1-dioxothiolane), 1,3-dimethyl-2-imidazolidinone, 1,3-diethyl-2-imidazolidinone, dimethyl sulfone, diethyl sulfone, diisopropyl sulfone and diphenyl sulfone.

The reduced viscosity of the aromatic polysulfone is preferably at least 0.3 dL/g but not more than 0.5 dL/g, and is more preferably at least 0.35 dL/g but not more than 0.50 dL/g. The higher the reduction viscosity of the aromatic polysulfone, the easier it is to improve the heat resistance and the strength and rigidity, but if the reduction viscosity is too high (namely, higher than the above upper limit), then the melting temperature and the melt viscosity are prone to becoming very high, and the fluidity tends to deteriorate. The "reduction viscosity" is the value measured at 25°C, using an Ostwald viscosity tube, for an N,N-dimethylformamide solution having a resin concentration of 1.0 g/100 ml.

In the polycondensation, if the assumption is made that no side reactions occur, then the closer the molar ratio between the dihalogenosulfone compound and the dihydroxy compound is to 1:1, the larger the amount used of the alkali metal carbonate salt, the higher the temperature during the polycondensation, and the longer the polycondensation reaction time, the higher the degree of polymerization of the obtained aromatic polysulfone tends to become, and the easier it becomes to achieve a higher reduction viscosity.

However, in actuality, side reactions caused by by-product alkali hydroxide (for example, a hydroxide of an alkali metal) or the like, such as substitutions of halogen atoms with hydroxyl groups or depolymerization reactions, do occur, and these side reactions tend to cause a reduction in the degree of polymerization of the obtained aromatic polysulfone, and a decrease in the reduction viscosity.

Accordingly, it is preferable that the molar ratio between the dihalogenosulfone compound and the dihydroxy compound, the amount used of the alkali metal carbonate salt, the temperature during the polycondensation and the length of the polycondensation reaction are preferably adjusted with due consideration of the level of these side reactions, so as to obtain an aromatic polysulfone having the desired reduction viscosity.

A single type of aromatic polysulfone may be used alone, or a combination of two or more types may be used.

In the resin composition of the present embodiment, the amount of the aromatic polysulfone, when the total mass of the aromatic polysulfone, the liquid crystal polyester and the glass filler is deemed to be 100 parts by mass, is preferably at least 30 parts by mass but not more than 90 parts by mass, is more preferably at least 40 parts by mass but not more than 80 parts by mass, and is even more preferably at least 55 parts by mass but not more than 70 parts by mass.

### (Liquid Crystal Polyester)

In the resin composition of the present embodiment, the aforementioned liquid crystal polyester can improve the fluidity of the resin composition. The fluidity of the resin composition tends to decrease due to the effect of the aromatic polysulfone, but including the liquid crystal polyester enables the resin composition to have an appropriate fluidity.

The liquid crystal polyester is a liquid crystal polyester that exhibits liquid crystallinity in a melted state, and preferably melts at a temperature of not more than 450°C. The liquid crystal polyester may also be a liquid crystal polyester amide, a liquid crystal polyester ether, a liquid crystal polyester carbonate, or a liquid crystal polyester imide. The liquid crystal polyester is preferably a fully aromatic liquid crystal polyester produced using only aromatic compounds as the raw material monomers.

Typical examples of the liquid crystal polyester include liquid crystal polyesters obtained by polymerizing (namely, polycondensing) an aromatic hydroxycarboxylic acid, an aromatic dicarboxylic acid, and at least one compound selected from the group consisting of aromatic diols, aromatic hydroxylamines and aromatic diamines; liquid crystal polyesters obtained by polymerizing a plurality of aromatic hydroxycarboxylic acids; liquid crystal polyesters obtained by polymerizing an aromatic dicarboxylic acid, and at least one compound selected from the group consisting of aromatic diols, aromatic hydroxylamines and aromatic diamines; and liquid crystal polyesters obtained by polymerizing a polyester such as polyethylene terephthalate and an aromatic hydroxycarboxylic acid. Here, each of the aromatic hydroxycarboxylic acid, the aromatic dicarboxylic acid, the aromatic diol, the aromatic hydroxylamine and the aromatic diamine may, independently, be partially or totally replaced with a polymerizable derivative thereof.

Examples of polymerizable derivatives of compounds having a carboxyl group, such as the aromatic hydroxycarboxylic acid and the aromatic dicarboxylic acid, include derivatives in which the carboxyl group is substituted with an alkoxycarbonyl group or an aryloxycarbonyl group (namely, esters), derivatives in which the carboxyl group is substituted with a haloformyl group (namely, acid halides), and derivatives in which the carboxyl groups are substituted with an acyloxycarbonyl group (namely, acid anhydrides).

Examples of polymerizable derivatives of compounds having a hydroxyl group, such as the aromatic hydroxycarboxylic acid, the aromatic diol and the aromatic hydroxylamine, include derivatives in which the hydroxyl group is acylated and converted to an acyloxyl group (namely, acylated compounds).

Examples of polymerizable derivatives of compounds having an amino group, such as the aromatic hydroxylamine and the aromatic diamine, include derivatives in which the amino group is acylated and converted to an acylamino group (namely, acylated compounds).

The liquid crystal polyester preferably has a repeating unit represented by general formula (1) shown below (hereinafter sometimes referred to as "the repeating unit (1)"), and more preferably has the repeating unit (1), a repeating unit represented by general formula (2) shown below (hereinafter sometimes referred to as "the repeating unit (2)"), and a repeating unit represented by general formula (3) shown below (hereinafter sometimes referred to as "the repeating unit (3)").

(1) -O-Ar¹-CO-

(2) -CO-Ar²-CO-

(3) -X-Ar³-Y-

(In the formulas, Ar¹ represents a phenylene group, a naphthylene group, or a biphenylylene group; each of Ar² and Ar³ independently represents a phenylene group, a naphthylene group, a biphenylylene group, or a group represented by general formula (4) shown below; each of X and Y independently represents an oxygen atom or an imino group (-NH-); and one or more hydrogen atoms in the groups represented by Ar¹, Ar² and Ar³ may each be independently substituted with a halogen atom, an alkyl group or an aryl group.)

(4) -Ar⁴-Z-Ar⁵-

(In the formula, each of Ar⁴ and Ar⁵ independently represents a phenylene group or a naphthylene group, and Z represents an oxygen atom, sulfur atom, carbonyl group, sulfonyl group or alkylidene group.)

Examples of the halogen atom that may substitute at least one hydrogen atom in the group represented by Ar¹, Ar² or Ar³ include a fluorine atom, chlorine atom, bromine atom and iodine atom.

The alkyl group that may substitute at least one hydrogen atom in the group represented by Ar¹, Ar² or Ar³ is preferably an alkyl group having a carbon number of 1 to 10, and examples include a methyl group, ethyl group, n-propyl group, isopropyl group, n-butyl group, isobutyl group, sec-butyl group, tert-butyl group, n-hexyl group, n-heptyl group, 2-ethylhexyl group, n-octyl group, n-nonyl group and n-decyl group.

The aryl group that may substitute at least one hydrogen atom in the group represented by Ar¹, Ar² or Ar³ is preferably an alkyl group having a carbon number of 6 to 20, and examples include monocyclic aromatic groups such as a phenyl group, o-tolyl group, m-tolyl group and p-tolyl group, and condensed aromatic groups such as a 1-naphthyl group and 2-naphthyl group.

In those cases where at least one hydrogen atom in the group represented by Ar¹, Ar² or Ar³ is substituted by one of these groups, the number of substitutions for each group represented by Ar¹, Ar² or Ar³ is, independently, preferably one or two, and is more preferably one.

The aforementioned alkylidene group is preferably an alkylidene group having a carbon number of 1 to 10, and examples include a methylene group, ethylidene group, isopropylidene group, n-butylidene group and 2-ethylhexylidene group.

The repeating unit (1) is a repeating unit derived from an aromatic hydroxycarboxylic acid.

Here, "derived" means a change in the chemical structure due to polymerization.

The repeating unit (1) is preferably a repeating unit in which Ar¹ is a 1,4-phenylene group (for example, a repeating unit derived from p-hydroxybenzoic acid) or a repeating unit in which Ar¹ is a 2,6-naphthylene group (for example, a repeating unit derived from 6-hydroxy-2-naphthoic acid), and a repeating unit in which Ar¹ is a 2,6-naphthylene group is more preferable.

The repeating unit (2) is a repeating unit derived from an aromatic dicarboxylic acid.

The repeating unit (2) is preferably a repeating unit in which Ar² is a 1,4-phenylene group (for example, a repeating unit derived from terephthalic acid), a repeating unit in which Ar² is a 1,3-phenylene group (for example, a repeating unit derived from isophthalic acid), a repeating unit in which Ar² is a 2,6-naphthylene group (for example, a repeating unit derived from 2,6-naphthalenedicarboxylic acid), or a repeating unit in which Ar² is a diphenyl ether-4,4'-diyl group (for example, a repeating unit derived from diphenyl ether-4,4'-dicarboxylic acid), and a repeating unit in which Ar² is a 1,4-phenylene group or a 1,3-phenylene group is more preferable.

The repeating unit (3) is a repeating unit derived from an aromatic diol, an aromatic hydroxylamine or an aromatic diamine.

The repeating unit (3) is preferably a repeating unit in which Ar³ is a 1,4-phenylene group (for example, a repeating unit derived from hydroquinone, p-aminophenol or p-phenylenediamine), or a repeating unit in which Ar³ is a 4,4'-biphenylylene group (for example, a repeating unit derived from 4,4'-dihydroxybiphenyl, 4-amino-4'-hydroxybiphenyl or 4,4'-diaminobiphenyl).

In those cases where the liquid crystal polyester includes the repeating unit (1), the repeating unit (2) and the repeating unit (3), the amount of the repeating unit (1), when the total of the repeating unit (1), the repeating unit (2) and the repeating unit (3) is deemed to be 100 mol%, is preferably at least 30 mol%, more preferably at least 30 mol% but not more than 80 mol%, even more preferably at least 40 mol% but not more than 70 mol%, and most preferably at least 45 mol% but not more than 65 mol%.

In those cases where the liquid crystal polyester includes the repeating unit (1), the repeating unit (2) and the repeating unit (3), the amount of the repeating unit (2), when the total of the repeating unit (1), the repeating unit (2) and the repeating unit (3) is deemed to be 100 mol%, is preferably not more than 35 mol%, more preferably at least 10 mol% but not more than 35 mol%, even more preferably at least 15 mol% but not more than 30 mol%, and most preferably at least 17.5 mol% but not more than 27.5 mol%.

In those cases where the liquid crystal polyester includes the repeating unit (1), the repeating unit (2) and the repeating unit (3), the amount of the repeating unit (3), when the total of the repeating unit (1), the repeating unit (2) and the repeating unit (3) is deemed to be 100 mol%, is preferably not more than 35 mol%, more preferably at least 10 mol% but not more than 35 mol%, even more preferably at least 15 mol% but not more than 30 mol%, and most preferably at least 17.5 mol% but not more than 27.5 mol%.

In other words, in the liquid crystal polyester, when the total of the repeating unit (1), the repeating unit (2) and the repeating unit (3) is deemed to be 100 mol%, it is preferable that the amount of the repeating unit (1) is at least 30 mol% but not more than 80 mol%, the amount of the repeating unit (2) is at least 10 mol% but not more than 35 mol%, and the amount of the repeating unit (3) is at least 10 mol% but not more than 35 mol%.

The larger the amount of the repeating unit (1) in the liquid crystal polyester, the more easily the melt fluidity, the heat resistance, and the strength and rigidity can be improved, but if the amount is too large (namely, larger than the above upper limit), then the melting temperature and the melt viscosity tend to increase, and the temperature required for molding tends to increase.

In the liquid crystal polyester, the ratio between the amount of the repeating unit (2) and the amount of the repeating unit (3) is represented by [amount of repeating unit (2)] / [amount of repeating unit (3)] (mol%/mol%), and is preferably from 0.9/1 to 1/0.9, more preferably from 0.95/1 to 1/0.95, and even more preferably from 0.98/1 to 1/0.98.

The liquid crystal polyester preferably has structural units containing a 2,6-naphthylene group as each of the repeating unit (1), the repeating unit (2) and the repeating unit (3). Further, if the total of all the repeating units is deemed to be 100 mol%, then the amount of repeating units containing a 2,6-naphthylene group in the liquid crystal polyester is preferably at least 40 mol% but not more than 75 mol%. Provided the amount of repeating units containing a 2,6-naphthylene group falls within the above range, the obtained resin composition has improved fluidity during melt processing, and is more suited to the processing of large-scale members.

In the liquid crystal polyester, each of the repeating units (1) to (3) may, independently, include only a single type of repeating unit, or include two or more types of repeating units. Further, the liquid crystal polyester may also have either one, or two or more, other repeating units besides the repeating units (1) to (3), but the amount of those other repeating units, relative to the total of all the repeating units, is preferably at least 0 mol% but not more than 10 mol%, and more preferably at least 0 mol% but not more than 5 mol%.

In another aspect, the liquid crystal polyester may have at least one repeating unit selected from the group consisting of the repeating unit (1), the repeating unit (2) and the repeating unit (3), wherein the total amount of the repeating units (1) to (3), relative to the total amount of all the repeating units, is from 90 to 100 mol%, preferably from 95 to 100 mol%, and may be 100 mol%.

The liquid crystal polyester preferably has a repeating unit (3) in which X and Y both represent oxygen atoms, namely a repeating unit derived from a prescribed aromatic diol, as this tends to lower the melt viscosity. It is more preferable that the repeating unit (3) includes only units in which X and Y both represent oxygen atoms.

The liquid crystal polyester is preferably produced by performing a melt polymerization of the raw material monomers corresponding with the repeating units that constitute the liquid crystal polyester, and subjecting the thus obtained polymer (sometimes referred to as a prepolymer) to a solid phase polymerization. This enables a high-molecular weight liquid crystal polyester having superior heat resistance, strength and rigidity to be produced with good operability. The melt polymerization may be performed in the presence of a catalyst, and examples of the catalyst include metal compounds such as magnesium acetate, stannous acetate, tetrabutyl titanate, lead acetate, sodium acetate, potassium acetate and antimony trioxide, and nitrogen-containing heterocyclic compounds such as N,N-dimethylaminopyridine and N-methylimidazole, and of these, nitrogen-containing heterocyclic compounds are preferable.

The flow beginning temperature of the liquid crystal polyester is preferably at least 270°C, more preferably at least 270°C but not more than 400°C, and even more preferably at least 280°C but not more than 380°C. The higher the flow beginning temperature of the liquid crystal polyester, the more easily the heat resistance and the strength and rigidity can be improved, but if the flow beginning temperature is too high

(namely, higher than the above upper limit), then a very high temperature is required to melt the polyester, thermal degradation during molding becomes more likely, and the viscosity upon melting tends to increase, causing a deterioration in fluidity.

The "flow beginning temperature" is also called the flow temperature or the fluidization temperature, and is the temperature that yields a viscosity of 4,800 Pa·s (48,000 poise) when the liquid crystal polyester is melted by heating at a rate of temperature increase of 4°C/minute under a load of 9.8 MPa (100 kg/cm²) using a capillary rheometer, and extruded from a nozzle having an inner diameter of 1 mm and a length of 10 mm, and is a temperature that acts as a measure of the molecular weight of the liquid crystal polyester (see Naoyuki Koide (ed.), "Liquid Crystal Polymers - Synthesis, Molding, Applications -", CMC Publishing Co., Ltd., June 5, 1987, p. 95).

A single type of liquid crystal polyester may be used alone, or a combination of two or more types may be used.

In the resin composition of the present embodiment, the amount of the liquid crystal polyester, when the total mass of the aromatic polysulfone, the liquid crystal polyester and the glass filler is deemed to be 100 parts by mass, is at least 10 parts by mass but not more than 30 parts by mass.

### (Glass Filler)

The glass filler improves the heat resistance and workability of the molded object of the resin composition of the present embodiment, and imparts the molded object with superior strength and a high elastic modulus.

The glass filler is usually the raw material that has the highest probability of containing boron oxide.

There are no particular limitations on the glass filler, provided it does not impair the effects of the present invention. Examples of the material for the glass fiber include general-purpose alkali glass (for example, A-glass), chemical acid-resistant glass (for example, C-glass), low-density glass (for example, D-glass), and corrosion-resistant borosilicate glass (for example, ECR-glass).

Among these, in terms of exhibiting superior acid resistance and favorable mechanical and electrical quality, and forming a molded object with superior strength and the like, the material for the glass filler is preferably ECR-glass.

If necessary, the glass filler may be a filler that has been treated with a coupling agent such as a silane-based coupling agent or a titanium-based coupling agent.

Although there are no particular limitations on the boron oxide content of the glass filler, the amount if preferably at least 0% by mass but not more than 12% by mass, more preferably at least 0% by mass but not more than 10% by mass, and even more preferably at least 0% by mass but not more than 8% by mass. The boron oxide content of the glass filler may also be 0% by mass (substantially 0% by mass), namely, the glass filler may contain no boron oxide.

The boron oxide content of the glass filler can be determined using the same method as that used for determining the boron oxide content of the resin composition. In this case, the expression that "the glass filler contains no boron oxide" means that the boron oxide content of the glass filler is less than the detection limit.

There are no particular limitations on the form of the glass filler, and fibrous, plate-like or spherical particles may be used, but in terms of enhancing the effects obtained by using the filler, a fibrous filler is preferable. In other words, the glass filler is preferably glass fiber.

Examples of the glass fiber include fibers produced by any of various methods, including chopped glass fiber and milled glass fiber.

The average fiber length of the glass fiber is preferably at least 1 mm but not more than 4 mm. When the average fiber length of the glass fiber is at least 1 mm, the effect of the glass fiber as a reinforcing material in the molded object obtained from the resin composition containing the glass filler is improved compared with the case where the average fiber length is less than 1 mm. Further, when the average fiber length of the glass fiber is not more than 4 mm, the thin-wall fluidity of the resin composition improves compared with the case where the average fiber length exceeds 4 mm.

The fiber diameter of the glass fiber (sometimes referred to as the single fiber diameter) is preferably at least 6 µm but not more than 15 µm. When the fiber diameter of the glass fiber is at least 6 µm, handling of the resin composition tends to be easier than the case where the fiber diameter is less than 6 µm. Further, when the fiber diameter of the glass fiber is not more than 15 µm, the fluidity of the resin composition improves, and the effect of the glass fiber as a reinforcing material in the molded object obtained from the resin composition containing the glass filler is improved, compared with the case where the fiber diameter exceeds 15 µm.

In this description, unless specifically stated otherwise, the "average fiber length of the glass fiber" means the value measured using the method disclosed in JIS R33420 "7.8 Length of Chopped Strands".

Further, unless specifically stated otherwise the "fiber diameter of the glass fiber" means the value measured using "method A" from among the methods disclosed in JIS R3420 "7.6 Single Fiber Diameter".

The weight-average fiber length and number-average fiber diameter of a fibrous filler are determined from the external shape of the fibrous filler in the resin composition, and specifics of the measurement methods for those values are described below.

First, 1.0 g of the resin composition is placed in a crucible, and is ashed by treatment at 600°C for 4 hours in an electric furnace. The thus obtained residue is dispersed in methanol and spread onto a glass slide, a microscope photograph is taken, the shapes (fiber lengths) of the glass fibers are read directly from the photograph, and the average value of the fiber lengths is calculated. The number of fibers measured to calculate the average value is at least 400. For each weight, the weight is calculated from the specific gravity of the glass fiber relative to each fiber length, and in the calculation of the average value, the total weight of the sample is used.

A single type of glass fiber may be used alone, or a combination of two or more types may be used.

In the resin composition of the present embodiment, the amount of the glass filler, when the total mass of the aromatic polysulfone, the liquid crystal polyester and the glass filler is deemed to be 100 parts by mass, is preferably at least 3 parts by mass but not more than 30 parts by mass, is more preferably at least 5 parts by mass but not more than 25 parts by mass, and is even more preferably at least 10 parts by mass but not more than 20 parts by mass.

By ensuring that the amount of the glass filler satisfies this type of range, the resin composition of the present embodiment has fluidity that is more suited to the molding of large-scale members, and molded objects having the type of superior strength required for vehicle and aircraft members can be obtained.

### (Other Components)

The resin composition of the present embodiment may also contain other components that do not correspond with any of the aromatic polysulfone, the liquid crystal polyester or the glass filler, provided these other components do not impair the effects of the present invention.

Examples of these other components include fillers other than the glass filler (hereinafter sometimes referred to as "other fillers"), additives, and resins besides the aromatic polysulfone and the liquid crystal polyester (hereinafter sometimes referred to as "other resins").

A single type of these other components may be used alone, or a combination of two or more types may be used.

The other fillers mentioned above may be fibrous fillers, plate-like fillers, or particulate fillers such as spherical fillers that are neither fibrous nor plate-like.

Further, the other fillers may be inorganic fillers or organic fillers.

Examples of fibrous inorganic fillers include carbon fiber such as PAN-based carbon fiber and pitch-based carbon fiber; ceramic fiber such as silica fiber, alumina fiber and silica-alumina fiber; metal fiber such as stainless steel fiber; and whiskers such as potassium titanate whiskers, barium titanate whiskers, wollastonite whiskers, aluminum borate whiskers, silicon nitride whiskers and silicon carbide whiskers.

Examples of fibrous organic fillers include polyester fiber and aramid fiber.

Examples of plate-like inorganic fillers include talc, mica, graphite, wollastonite, barium sulfate and calcium carbonate. The mica may be muscovite, phlogopite, fluorphlogopite or tetrasilic mica.

Examples of particulate inorganic fillers include silica, alumina, titanium oxide, boron nitride, silicon carbide and calcium carbonate.

In those cases where the resin composition of the present embodiment contains other fillers, the amount of those other fillers in the resin composition is preferably greater than 0 parts by mass but not more than 100 parts by mass, per 100 parts by mass of the total mass of the aromatic polysulfone and the liquid crystal polyester.

Examples of the additives include antioxidants, heat stabilizers, ultraviolet absorbers, antistatic agents, surfactants, flame retardants and colorants.

In those cases where the resin composition of the present embodiment contains these additives, the amount of the additives in the resin composition is preferably greater than 0 parts by mass but not more than 5 parts by mass, per 100 parts by mass of the total mass of the aromatic polysulfone, the liquid crystal polyester and the glass filler.

Examples of the other resins include thermoplastic resins other than aromatic polysulfones, such as polypropylenes, polyamides, polyesters, polyphenylene sulfides, polyetherketones, polycarbonates, polyphenylene ethers and polyetherimides; and thermosetting resins such as phenol resins, epoxy resins, polyimide resins and cyanate resins.

In those cases where the resin composition of the present embodiment contains these other resins, the amount of the other resins in the resin composition, when the total amount of the aromatic polysulfone and the liquid crystal polyester is deemed to be 100 parts by mass, is preferably greater than 0 parts by mass but not more than 20 parts by mass.

As mentioned above, the raw material that has the highest probability of containing boron oxide is the glass filler, but in those cases where there is a possibility that raw materials other than the glass filler may contain boron oxide, the amount used and the like of those raw materials is preferably considered carefully so that the boron oxide content falls within the appropriate range.

For example, in the present embodiment, the boron oxide content of the resin composition can be adjusted to the prescribed amount by combining a plurality of types of glass filler for which the boron oxide content is known.

The resin composition of the present embodiment can be produced by mixing the aromatic polysulfone, the liquid crystal polyester, the glass filler, and any other components that are used as required, either in a single batch or in an appropriate order.

The resin composition of the present embodiment is preferably a pelleted composition obtained by using an extruder to perform melt-kneading of the aromatic polysulfone, the liquid crystal polyester, the glass filler, and any other components that are used as required.

The extruder is preferably a device having a cylinder, one or more screws disposed inside the cylinder, and one or more supply ports provided on the cylinder, and is more preferably a device that also has one or more vents in the cylinder.

In other words, one aspect of the method for producing the resin composition of the present embodiment comprises: mixing the aromatic polysulfone, the liquid crystal polyester, the glass filler, and any other components that are used as required, melt-kneading the resulting mixture in an extruder, and extruding the melt-kneaded mixture.

### <Molded Object>

The molded object that represents one embodiment of the present invention is a molded object obtained by molding the resin composition of the embodiment described above.

By molding the resin composition in the manner described above, the molded object of the present embodiment either contains no boron oxide, or has the boron oxide content suppressed to a low level. As a result, even upon long-term use, any change in color of the molded object is suppressed, and the occurrence of external appearance defects is suppressed. In other words, the molded object has a color difference between before and after the accelerated test described below that is at least 0 but not more than 1.1, and preferably at least 0 but not more than 0.7.

The reason why external appearance defects occur on the molded object upon long-term use when the boron oxide content of the resin composition is greater than the prescribed value is not entirely clear, but it is assumed that the boron oxide may ionize at the surface or in the vicinity of the surface of the molded object, where it is more readily exposed to the effects of the external environment, and that these ions may then migrate into the interior of the molded object, causing changes in the internal composition of the molded object. For example, when the glass filler that is used contains boron oxide, it is surmised that the boron oxide may ionize in the glass filler contained in the molded object, and these ions may then be eluted from the glass filler, causing changes in the composition of the glass filler and the internal composition of the molded object.

It is thought that the reason that external appearance defects occur over time on the molded object when the boron oxide content of the resin composition is greater than the prescribed value is similar to that described above, and may be due to changes in the internal composition of the resin composition.

The method used for molding the resin composition is preferably a melt molding method, and examples of the melt molding method include injection molding methods, extrusion molding methods such as the T-die method or inflation method, compression molding methods, blow molding methods, vacuum molding methods, and press molding methods. Among these, the molding method for the above resin composition is preferably an injection molding method.

In other words, one aspect of the molded object of the present embodiment is a molded object obtained by injection molding of the above resin composition.

Examples of products and components formed from the molded object of the present embodiment include bobbins such as optical pickup bobbins and transformer bobbins; relay components such as relay cases, relay bases, relay sprues and relay armatures; connectors such as RIMM, DDR and CPU sockets, as well as S/O, DIMM and Board to Board connectors, FPC connectors and card connectors; reflectors such as lamp reflectors and LED reflectors; holders such as lamp holders and heater holders; diaphragms such as speaker diaphragms; separation claws such as separation claws for copiers and separation claws for printers; camera module components; switch components; motor components; sensor components; hard disk drive components; tableware such as ovenware; vehicle components; battery components; aircraft components; and sealing members such as sealing members for semiconductor elements and sealing members for coils.

One aspect of the resin composition that represents one embodiment of the present invention is
a resin composition comprising an aromatic polysulfone, a liquid crystal polyester, and a glass filler; wherein
the boron oxide content, relative to the total mass of the resin composition, is at least 0% by mass but less than 1.4% by mass; and
when the total mass of the aromatic polysulfone, the liquid crystal polyester and the glass filler is deemed to be 100 parts by mass,
the amount of the aromatic polysulfone is at least 30 parts by mass but not more than 90 parts by mass,
the amount of the liquid crystal polyester is at least 10 parts by mass but not more than 30 parts by mass, and
the amount of the glass filler is at least 3 parts by mass but not more than 30 parts by mass.

One aspect of the resin composition that represents one embodiment of the present invention is
a resin composition comprising an aromatic polysulfone, a liquid crystal polyester, and a glass filler; wherein
the resin composition has a boron oxide content, relative to the total mass of the resin composition, of at least 0% by mass but less than 1.4% by mass;
the aromatic polysulfone
has at least the repeating unit (5) described above,
preferably has a repeating unit derived from an aromatic polyethersulfone, and has a reduction viscosity that is at least 0.3 dL/g but not more than 0.50 dL/g;
the liquid crystal polyester
has at least the repeating unit (1), the repeating unit (2) and the repeating unit (3) described above, and
preferably has a repeating unit derived from 6-hydroxy-2-naphthoic acid, a repeating unit derived from 2,6-naphthalenedicarboxylic acid, a repeating unit derived from terephthalic acid, and a repeating unit derived from hydroquinone;
the glass filler
comprises glass fiber having an average fiber length of at least 1 mm but not more than 4 mm, and the boron oxide content of the glass fiber is at least 0% by mass but not more than 12% by mass, and
preferably comprises ECR glass for which the average fiber length is at least 1 mm but not more than 4 mm; and
when the total mass of the aromatic polysulfone, the liquid crystal polyester and the glass filler is deemed to be 100 parts by mass,
the amount of the aromatic polysulfone is at least 30 parts by mass but not more than 90 parts by mass,
the amount of the liquid crystal polyester is at least 10 parts by mass but not more than 30 parts by mass, and
the amount of the glass filler is at least 3 parts by mass but not more than 30 parts by mass.

One aspect of the molded object that represents one embodiment of the present invention is a molded object having a characteristic wherein, when a test piece of dimensions 64 mm × 64 mm × 3 mm produced from the resin composition according to one embodiment of the present invention is immersed in 100 mL of an aqueous solution of sulfuric acid of pH 2.0 and subjected to an accelerated test by heating at 120°C for 500 hours, the test piece after the accelerated test and a test piece before the accelerated test are measured for lightness and chromaticity using a color-difference meter without cutting ultraviolet light, under conditions including the illumination/light-receiving optical system D65, a C light source, an observation field of view of 10° and a measurement diameter of 25.4 mm, and the color difference between the test pieces before and after the accelerated test is determined, the color difference is at least 0 but not more than 1.1.

Yet another aspect of the resin composition that represents one embodiment of the present invention is a resin composition that is capable of producing a molded object having the characteristic described above.

### EXAMPLES

The present invention is described below in further detail using specific examples. However, the present invention is in no way limited by the following examples.

### [Production Example 1]

### <Production of Liquid Crystal Polyester>

A reactor fitted with a stirring device, a torque meter, a nitrogen gas inlet tube, a thermometer and a reflux condenser was charged with 6-hydroxy-2-naphthoic acid (1,034.99 g, 5.5 mol), 2,6-naphthalenedicarboxylic acid (378.33 g, 1.75 mol), terephthalic acid (83.07 g, 0.5 mol), hydroquinone (272.52 g, 2.475 mol, a 0.225 molar excess relative to the total molar amount of 2,6-naphthalenedicarboxylic acid and terephthalic acid), acetic anhydride (1,226.87 g, 12 mol), and 1-methylimidazole (0.17 g) as a catalyst. The gas inside the reactor was substituted with nitrogen gas, the temperature was then raised from room temperature to 145°C over a period of 15 minutes while stirring the contents under a stream of nitrogen gas, and the mixture was then refluxed at 145°C for one hour.

Subsequently, the temperature was raised from 145°C to 310°C over a period of 3 hours and 30 minutes, while by-product acetic acid and unreacted acetic anhydride and the like were removed by distillation, and after holding the temperature at 310°C for 3 hours, the solid prepolymer (reaction mixture) was extracted, and this prepolymer was then cooled to room temperature.

Subsequently, a crusher was used to crush the prepolymer to particles having a particle size of about 0.1 mm to 1 mm. The thus obtained crushed product was heated, under an atmosphere of nitrogen, from room temperature to 250°C over a period of one hour, and then from 250°C to 302°C over a period of 8 hours and 40 minutes, and was then held at 302°C for 5 hours to effect a solid phase polymerization. The solid phase polymer was then cooled to obtain a powdered liquid crystal polyester (hereinafter sometimes referred to as "LCP1"). The flow beginning temperature of the obtained liquid crystal polyester was 320°C.

The method described below was used to analyze and confirm the amounts of the repeating units in the obtained liquid crystal polyester.

In other words, a sample of the liquid crystal polyester of about 100 mg was placed in a SUS tube, about 5 mL of methanol was added, and the tube was then stoppered and subjected to a heat treatment in a sand bath at 300°C for 40 minutes to decompose the polymer.

Following cooling, tetrahydrofuran (hereinafter sometimes referred to as THF) was added to recover the contents, and the contents were then diluted with THF using a 50 mL measuring flask.

The thus obtained THF solution was analyzed using a gas chromatograph (Agilent 6890N, manufactured by Agilent Technologies, Inc.), and the amount of each repeating unit was measured.

The results revealed that when the total amount of all the repeating units was deemed to be 100 mol%, the liquid crystal polyester obtained in the manner described above had 55 mol% of the repeating unit (1) in which Ar¹ was a 2,6-naphthylene group, 17.5 mol% of the repeating unit (2) in which Ar² was a 2,6-naphthylene group, 5 mol% of the repeating unit (2) in which Ar² was a 1,4-phenylene group, and 22.5 mol% of the repeating unit (3) in which Ar³ was a 1,4-phenylene group.

### [Example 1]

### <Production of Resin Composition>

An aromatic polysulfone (SUMIKAEXCEL (a registered trademark) PES 3600P, manufactured by Sumitomo Chemical Co., Ltd., reduction viscosity: 0.36 dL/g, hereinafter sometimes referred to as "PES1") (64 parts by mass), LCP1 (16 parts by mass), and a glass fiber 1 (Advantex, manufactured by Owens Corning Inc., fiber diameter: 10.5 µm, average fiber length: 3.0 mm, B₂O₃ content: 0% by mass, hereinafter sometimes referred to as "GF1") (20 parts by mass) were mixed together to obtain a resin composition 1. Each of the blend components and the blend amount of each component are shown in Table 1.

### <Production of Molded Object>

Using an injection molding device (UH1000-80, manufactured by Nissei Plastic Industrial Co., Ltd.) under conditions including a cylinder temperature of 380°C, a mold temperature of 150°C, an injection speed of 100 mm/second, a holding pressure of 700 kg/cm² (68.6 MPa), and a cooling time of 25 seconds, the resin composition obtained above was used to produce a molded object with dimensions of 64 mm × 64 mm × 3 mm.

### <Evaluations of Molded Object>

### [Accelerated Test]

A circular disc test piece with a diameter of 20 mm was cut from the produced molded object. Using an autoclave (manufactured by Taiatsu Techno Corporation), the obtained test piece was immersed in an aqueous solution of sulfuric acid of pH 2.0 (100 mL), and heated at 120°C for 500 hours.

### (Measurement of Color Difference)

Using a color difference meter (CM-3600d, manufactured by Konica Minolta, Inc.), under conditions including an illumination/light-receiving optical system D65, a C light source, an observation field of view of 10° and a measurement diameter of 25.4 mm, and without cutting ultraviolet light, test pieces from before and after the accelerated test were measured for lightness (L^{∗}: SCE method) and chromaticity (a^{∗}, b^{∗}: SCE method) using the L^{∗}a^{∗}b^{∗} color space, and the color difference between the two test pieces (ΔE: SCE method) was determined. The result is shown in Table 2.

### (Visual Inspection of Degree of Discoloration)

The test pieces from before and after the accelerated test were cut, the cut sections (cross-sections) were inspected visually, and the degree of discoloration of the test piece after the accelerated test was evaluated against the following criteria. The result is shown in Table 2.
A: no discoloration is discernible
B: very faint discoloration is discernible, but of no practical concern
C: clear discoloration is noticeable

### [Example 2]

### <Production of Resin Composition>

PES1 (64 parts by mass), LCP1 (16 parts by mass), GF1 (15 parts by mass), and a glass fiber 2 (CS03JAPX-1, manufactured by Owens Corning Japan LLC, fiber diameter: 10.5 µm, average fiber length: 3.0 mm, B₂O₃ content: 7% by mass, hereinafter sometimes referred to as "GF2") (5 parts by mass) were mixed together to obtain a resin composition 2. Each of the blend components and the blend amount of each component are shown in Table 1.

### <Production of Molded Object and Evaluation>

With the exception of using the resin composition 2 instead of the resin composition 1, a molded object was produced and evaluated using the same methods as Example 1. The results are shown in Table 2.

### [Example 3]

### <Production of Resin Composition>

As shown in Table 1, PES1 (64 parts by mass), LCP1 (16 parts by mass), GF1 (10 parts by mass) and GF2 (10 parts by mass) were mixed together to obtain a resin composition 3.

### <Production of Molded Object and Evaluation>

With the exception of using the resin composition 3 instead of the resin composition 1, a molded object was produced and evaluated using the same methods as Example 1. The results are shown in Table 2.

### [Example 4]

### <Production of Resin Composition>

As shown in Table 1, PES1 (64 parts by mass), LCP1 (16 parts by mass), GF1 (5 parts by mass) and GF2 (15 parts by mass) were mixed together to obtain a resin composition 4.

### <Production of Molded Object and Evaluation>

With the exception of using the resin composition 4 instead of the resin composition 1, a molded object was produced and evaluated using the same methods as Example 1. The results are shown in Table 2.

### [Comparative Example 1]

### <Production of Resin Composition>

As shown in Table 1, PES1 (64 parts by mass), LCP1 (16 parts by mass) and GF2 (20 parts by mass) were mixed together to obtain a resin composition R1.

### <Production of Molded Object and Evaluation>

With the exception of using the resin composition R1 instead of the resin composition 1, a molded object was produced and evaluated using the same methods as Example 1. The results are shown in Table 2.

**[Table 1]**

| | Resin Composition | | | |
|---|---|---|---|---|
| | Blend components (% by mass) | | | B₂O₃ content (% by mass) |
| | Aromatic polysulfone | Liquid crystal polyester | Glass filler | |
| Example 1 | PES1 (64) | LCP1 (16) | GF1 (20) | 0 |
| Example 2 | PES1 (64) | LCP1 (16) | GF1 (15) | 0.4 |
| | | | GF2 (5) | |
| Example 3 | PES1 (64) | LCP1 (16) | GF1 (10) | 0.7 |
| | | | GF2 (10) | |
| Example 4 | PES1 (64) | LCP1 (16) | GF1 (5) | 1.1 |
| | | | GF2 (15) | |
| Comparative Example 1 | PES1 (64) | LCP1 (16) | GF2 (20) | 1.4 |

**[Table 2]**

| | Evaluation Results | | | | | | | |
|---|---|---|---|---|---|---|---|---|
| | Before accelerated test | | | After accelerated test | | | ΔE | Discoloration |
| | L^{∗} | a^{∗} | b^{∗} | L^{∗} | a^{∗} | b^{∗} | | |
| Example 1 | 79.75 | 0.60 | 10.03 | 79.49 | 0.97 | 9.46 | 0.72 | A |
| Example 2 | 80.56 | 0.58 | 10.60 | 80.87 | 0.93 | 10.36 | 0.53 | A |
| Example 3 | 80.37 | 0.75 | 10.05 | 80.16 | 0.84 | 9.43 | 0.66 | A |
| Example 4 | 81.19 | 0.56 | 10.61 | 81.92 | 0.97 | 11.28 | 1.07 | B |
| Comparative Example 1 | 79.77 | 0.63 | 10.41 | 81.77 | 0.82 | 10.41 | 2.00 | C |

As is evident from the above results, the molded objects of Examples 1 to 4 obtained from resin compositions having a low boron oxide content exhibited little color difference, namely little change in color tone, after the accelerated test, and visual inspections also revealed good suppression of discoloration, indicating good suppression of the occurrence of external appearance defects even upon long-term use. Comparison of Examples 1 to 3 and Example 4 confirmed that the lower the boron oxide content of the resin composition, the greater the discoloration suppression effect in the molded object after the accelerated test tended to become.

In contrast, the molded object of Comparative Example 1 obtained from a resin composition having a high boron oxide content exhibited a large color difference after the accelerated test, and it was also apparent from visual inspection that discoloration had not been suppressed, indicating that external appearance defects would occur upon long-term use.

### INDUSTRIAL APPLICABILITY

The present invention can be used in molded objects that require the suppression of external appearance defects that occur over time, including vehicle components and aircraft components, and is therefore extremely useful industrially.

## Claims

1. A resin composition comprising an aromatic polysulfone, a liquid crystal polyester and a glass filler, wherein a boron oxide content, relative to a total mass of the resin composition, is less than 1.4% by mass, and wherein an amount of the liquid crystal polyester, when a total mass of the aromatic polysulfone, the liquid crystal polyester and the glass filler is deemed to be 100 parts by mass, is at least 10 parts by mass but not more than 30 parts by mass.

2. The resin composition according to Claim 1, wherein the glass filler is glass fiber.

3. The resin composition according to Claim 1 or 2, wherein an amount of the glass filler, when a total mass of the aromatic polysulfone, the liquid crystal polyester and the glass filler is deemed to be 100 parts by mass, is at least 3 parts by mass but not more than 30 parts by mass.

4. The resin composition according to any one of Claims 1 to 3, wherein an average fiber length of the glass fiber is at least 1 mm but not more than 4 mm.

5. The resin composition according to any one of Claims 1 to 4, wherein the aromatic polysulfone has at least one repeating unit represented by the following general formula (5):
-Ph¹-SO₂-Ph²-O- (5)
wherein, in the formula (5), each of Ph¹ and Ph² independently represents a phenylene group, wherein one or more hydrogen atoms in the phenylene group may each be independently substituted with an alkyl group, an aryl group or a halogen atom, and
the aromatic polysulfone includes at least 80 mol% but not more than 100 mol%, of the repeating unit (5) relative to the total number of moles of all the repeating units that constitute the aromatic polysulfone.

6. The resin composition according to any one of Claims 1 to 5, wherein the amount of the aromatic polysulfone, when the total mass of the aromatic polysulfone, the liquid crystal polyester and the glass filler is deemed to be 100 parts by mass, is at least 30 parts by mass but not more than 90 parts by mass.

7. A molded object of the resin composition according to any one of Claims 1 to 6.

## Patentansprüche

1. Eine Harzzusammensetzung, umfassend ein aromatisches Polysulfon, einen Flüssigkristall-Polyester und einen Glas-Füllstoff, wobei ein Boroxidgehalt, bezogen auf eine Gesamtmasse der Harzzusammensetzung, weniger als 1,4 Massen-% beträgt und wobei eine Menge des Flüssigkristall-Polyesters, wenn eine Gesamtmasse des aromatischen Polysulfons, des Flüssigkristall-Polyesters und des Glas-Füllstoffes als 100 Massenteile betrachtet wird, mindestens 10 Massenteile aber nicht mehr als 30 Massenteile beträgt.

2. Die Harzzusammensetzung gemäß Anspruch 1, wobei der Glas-Füllstoff Glasfaser ist.

3. Die Harzzusammensetzung gemäß Anspruch 1 oder 2, wobei eine Menge des Glas-Füllstoffes, wenn eine Gesamtmasse des aromatischen Polysulfons, des Flüssigkristall-Polyesters und des Glas-Füllstoffes als 100 Massenteile betrachtet wird, mindestens 3 Massenteile aber nicht mehr als 30 Massenteile beträgt.

4. Die Harzzusammensetzung gemäß einem der Ansprüche 1 bis 3, wobei eine durchschnittliche Faserlänge der Glasfaser mindestens 1 mm aber nicht mehr als 4 mm beträgt.

5. Die Harzzusammensetzung gemäß einem der Ansprüche 1 bis 4, wobei das aromatische Polysulfon mindestens eine Wiederholungseinheit aufweist, dargestellt durch die nachstehende allgemeine Formel (5):
-Ph¹-SO₂-Ph²-O- (5)
wobei, in der Formel (5), jedes von Ph¹ und Ph² unabhängig eine Phenylengruppe darstellt, wobei ein oder mehrere Wasserstoffatome in der Phenylengruppe jeweils unabhängig voneinander durch eine Alkylgruppe, eine Arylgruppe oder ein Halogenatom substituiert sein kann/können, und
das aromatische Polysulfon mindestens 80 Mol-% aber nicht mehr als 100 Mol-% der Wiederholungseinheit (5) beinhaltet, bezogen auf die Gesamtzahl der Mole aller Wiederholungseinheiten, die das aromatische Polysulfon bilden.

6. Die Harzzusammensetzung gemäß einem der Ansprüche 1 bis 5, wobei die Menge des aromatischen Polysulfons, wenn die Gesamtmasse des aromatischen Polysulfons, des Flüssigkristall-Polyesters und des Glas-Füllstoffes als 100 Massenteile betrachtet wird, mindestens 30 Massenteile aber nicht mehr als 90 Massenteile beträgt.

7. Ein Formkörper aus der Harzzusammensetzung gemäß einem der Ansprüche 1 bis 6.

## Revendications

1. Composition de résine comprenant une polysulfone aromatique, un polyester cristal liquide et une charge de verre, dans laquelle la teneur en oxyde de bore, par rapport à la masse totale de la composition de résine, est inférieure à 1,4 % en masse, et dans laquelle la quantité du polyester cristal liquide, quand il est considéré que la masse totale de la polysulfone aromatique, du polyester cristal liquide et de la charge de verre est de 100 parties en masse, est d'au moins 10 parties en masse mais d'au plus 30 parties en masse.

2. Composition de résine selon la revendication 1, dans laquelle la charge de verre consiste en fibres de verre.

3. Composition de résine selon la revendication 1 ou 2, dans laquelle la quantité de la charge de verre, quand il est considéré que la masse totale de la polysulfone aromatique, du polyester cristal liquide et de la charge de verre est de 100 parties en masse, est d'au moins 3 parties en masse mais d'au plus 30 parties en masse.

4. Composition de résine selon l'une quelconque des revendications 1 à 3, dans laquelle la longueur de fibre moyenne des fibres de verre est d'au moins 1 mm mais d'au plus 4 mm.

5. Composition de résine selon l'une quelconque des revendications 1 à 4, dans laquelle la polysulfone aromatique a au moins un motif répétitif représenté par la formule générale (5) suivante :
-Ph¹-SO₂-Ph²-O- (5)
dans laquelle, dans la formule (5), chacun de Ph¹ et Ph² représente indépendamment un groupe phénylène, dans laquelle un ou plusieurs atomes d'hydrogène dans le groupe phénylène peuvent chacun être indépendamment substitués par un groupe alkyle, un groupe aryle ou un atome d'halogène, et la polysulfone aromatique contient au moins 80 % en moles mais au plus 100 % en moles du motif répétitif (5) par rapport au nombre total de moles de tous les motifs répétitifs qui constituent la polysulfone aromatique.

6. Composition de résine selon l'une quelconque des revendications 1 à 5, dans laquelle la quantité de la polysulfone aromatique, quand il est considéré que la masse totale de la polysulfone aromatique, du polyester cristal liquide et de la charge de verre est de 100 parties en masse, est d'au moins 30 parties en masse mais d'au plus 90 parties en masse.

7. Objet moulé de la composition de résine selon l'une quelconque des revendications 1 à 6.
